# EUROPEAN PATENT APPLICATION

(11) **EP 4 124 445 A1**
(43) Date of publication of application: **01.02.2023**
(21) Application number: 21188127.1
(22) Date of filing: 28.07.2021
(51) Int. Cl.: B29C 73/30, B29C 73/10, B64F 5/40

(54) **REPAIR TOOL AND METHOD FOR REPAIRING A COMPOSITE STRUCTURE**

(71) Applicant: Airbus Operations GmbH, 21129 Hamburg (DE)
(72) Inventor: Finger, Lennart, 21129 Hamburg (DE); Schubert, Konstantin, 21129 Hamburg (DE)
(74) Representative: Schornack, Oliver

(57) **Abstract**

Described is a repair tool (100) for repairing a composite structure (10) comprising an inner repair mould (105) and an outer repair mould (110), each shaped to abut against a first surface and a second surface of the composite structure (10) around an opening (15) in the composite structure (10), respectively, and each configured to at least partially cover the opening (15). The tool further comprises at least one bolt (120) connecting the inner repair mould (105) with the outer repair mould (110) and configured to move the inner repair mould (105) and the outer repair mould (110) towards one another and to clamp the composite structure (10). The at least one bolt (120) is mounted to the inner and outer repair moulds (105, 110) at a respective region corresponding to the opening (15) in the composite structure (10) or corresponding to an edge region of the composite structure (10) at a rim of the opening (15). Furthermore, a corresponding method of repairing a composite structure (10) with a repair patch (20) positioned in the opening (15) is disclosed.

## Description

The invention relates to a repair tool and method for repairing a composite structure. Particularly the invention relates to a repair tool and method for repairing a composite structure with a repair patch in an opening in the composite structure including connecting an inner and outer repair mould with bolts running through the repair patch or an edge region of the composite structure at a rim of the opening.

Repairing of a composite structure is difficult, since the damaged part of the composite structure may not always be easily accessible at its interior side, while it is easier to reach from the outside of the structure. For instance, at aircrafts and other vehicles, an interior side of large structural elements, such as a fuselage or a wing may not be reached without disassembling parts of the aircraft. This is not only time-consuming, but sometimes not possible, since more and more components of such vehicles are built in an integrated fashion, so that a non-destructive disassembly it becomes almost impossible.

It is therefore an object of the invention to provide a repair tool and method for repairing composite structures that allows time efficient and high quality repair of the composite structure.

This object is achieved by a repair tool with the features of claim 1, and a method with the features of claim 9.

Preferred embodiments are defined by the dependent claims.

According to a first exemplary aspect to better understand the present disclosure, a repair tool for repairing a composite structure comprises an inner repair mould shaped to abut against a first surface of the composite structure around an opening in the composite structure and configured to cover the opening, and an outer repair mould shaped to abut against a second surface of the composite structure around the opening in the composite structure and configured to cover the opening, wherein the second surface is opposite to the first surface. The inner and outer mould, hence, are shaped to correspond to the first and second surface of the composite structure, for example, the inner surface and the outer surface of a composite structure of a vehicle. For instance, the inner and/or outer repair mould may be shaped by having a curvature (in one direction, i.e. forming a portion of the cylinder, as well as in two directions, i.e. forming a portion of a sphere) corresponding to the curvature of the composite structure around the opening.

The repair tool further comprises at least one bolt connecting the inner repair mould with the outer repair mould and configured to move the inner repair mould and the outer repair mould towards one another and to clamp the composite structure. Thus, the at least one bolt facilitates pulling the inner and outer repair moulds towards one another, so that each mould presses on a respective one of the first and second surfaces of the composite structure.

The at least one bolt is mounted to the inner and outer repair moulds at a respective region corresponding to the opening in the composite structure or corresponding to an edge region of the composite structure at a rim of the opening. In other words, the at least one bolt runs through the repair patch or the edge region of the composite structure. This facilitates a mechanical connection between inner and outer repair moulds having a short (or shortest) distance between inner and outer moulds. Thus, the inner and outer moulds cannot only be aligned to one another with high precision, but a high pressure on the repair patch and the edge region of the composite structure can also be achieved.

The repair tool, therefore, is capable of allowing the repair of high performance composite structures, such as the structures comprising a high-performance thermoplastic material. These materials, such as PPS (poly-phenylene sulfide), PEI (polyetherimide), PAEK (Polyaryletherketone), e.g., PEKK (Polyetherketoneketone) and PEEK (Polyetheretherketone), have high melting temperatures (usually between 250°C and 400°C) and require a pressure on the full part during forming and consolidation. The repair tool further allows high precision repairs, thereby facilitating the restrictive tolerances usually applied in building aircrafts and particularly required for large aircraft parts, such as fuselage, wing, vertical stabiliser and tailplane.

Conventional repair techniques use a repair patch and the creation of tapered interfaces of the repair patch and the edge of the composite structure, and riveting the repair patch to the composite structure. This requires specially strengthened repair patches (thicker and reinforced for riveting and compensation of the reduced integration of the repair patch in the remaining composite structure) as well as reinforcing the composite structure surrounding the opening, in order to integrate the repair patch into the integral monocoque construction of such aircraft parts. However, this adds weight to the aircraft.

The repair tool of the present disclosure allows repair of the composite structure without riveting. Thus, the repair is easier, of higher quality and the resulting repaired structure has less weight than with conventional repair patches. In addition, due to the pressure that can be applied onto the repair patch and the composite structure, high-performance materials can be employed for the repair patch, so that the patch can sufficiently restore the structural integrity of the repaired composite structure and/or can satisfy operation requirements for the surrounding composite structure.

Moreover, the repair tool of the present disclosure further allows in-situ repair without disassembling the composite structure, in order to reach the interior side of the composite structure in the region to be repaired. The inner repair mould may even be positioned at the first (inner) surface of the composite structure by inserting it through the opening.

In an implementation variant the repair tool can further comprise a pressure distribution means configured to be arranged on a side of the inner repair mould abutting against the first surface of the composite structure and/or on a side of the outer repair mould abutting against the second surface of the composite structure. This allows the distribution of the pressure applied by the at least one bolt onto the entire repair site, i.e. the first and second surface of the composite structure contacted by the repair tool as well as the entire inner and outer surfaces of the repair patch. The pressure force equally distributed on the thermoplastic material of the repair patch avoids local delaminations and ensures good interface properties between the repair patch and the composite structure.

In another implementation variant, the pressure distribution means can comprise a caul sheet, a caul form, and/or a flexible layer. Such pressure distribution means does not only allow an equal pressure applied over the entire repair patch and first and second surface of the edge region of the composite structure. It can further be used for shaping or texturing the respective surface of the repair patch. Only as an example, a caul sheet may be formed from a thin sheet, such as a sheet of 0,1 to 0,8 mm.

In addition, the caul sheet or caul form can be provided with a shape corresponding to the (original) shape of the first or second surface of the composite structure at the opening and edge region. This allows use of a general inner and/or outer repair mould, applicable to differently shaped composite structures, while the actual shape of the first and second surface is provided by the caul sheet or caul form.

In yet another implementation variant, the flexible layer can comprise heat resistant silicone, one or more flexible cushions, and/or one or more inflatable cushions. Such a flexible layer facilitates pressure distribution between the respective repair mould and the caul sheet or caul form.

In addition, the material of the flexible layer may have a different thermal expansion, e.g., a higher thermal expansion, than the remaining parts of the repair tool, particularly the respective repair mould as well as the composite material of the repair patch and composite structure. This can be employed during heating the repair patch and composite structure, in order to create locally varying pressures during repair. Alternatively or additionally, a flexible and/or inflatable cushion may lead to pressure amplification due to the higher thermal expansion of the cushion compared with the remaining parts of the repair tool, which can be made, for example, from a metal material.

An inflatable cushion can further be used to equally or locally increase or decrease a pressure acting on the repair patch and/or composite structure by pressurizing or depressurizing an interior space of the cushion, respectively. Such cushion may be tubular and can extend at one end out of the associated repair mould. This allows a fluid connection with a source of a pressurized fluid.

In a further implementation variant, the repair tool can further comprise a pressurising device configured to apply a force on the at least one bolt moving the inner and outer repair mould towards one another. In other words, the pressurizing device moves the at least one bolt with respect to the inner or outer repair mould. Alternatively, the pressurizing device can move the at least one bolt with respect to the inner and outer repair mould.

In an exemplary implementation variant, the pressurising device can comprise a spring acting on the at least one bolt and at least one of the inner and outer repair mould. Alternatively or additionally, the pressurizing device can include or be a hydraulic or pneumatic cylinder, and/or a motor. Such pressurizing device may act on the at least one bolt relative to at least one of the inner and outer repair mould. In any case, this relative movement and application of forces leads to pressing the inner and outer repair mould towards one another and clamping the repair patch and the edge region of the composite structure.

In an implementation variant, the repair tool can further comprise at least one seal configured to seal a space delimited by the inner or outer repair mould and including the opening in the composite structure in an airtight manner. Such space may be delimited by the at least one seal around the opening, i.e. around the rim of the opening at the composite structure. Furthermore, the at least one seal may also be provided in regions of the inner and/or outer mould where the at least one bolt passes through. Thus, the entire space where the repair patch is arranged may be sealed in an airtight manner.

In another implementation variant, the repair tool can further comprise an evacuation port in the inner repair mould and/or in the outer repair mould. The evacuation port can be in fluid communication with a space delimited by the inner and outer repair mould. This allows evacuation of air of the space delimited by the inner and outer repair mould, particularly the space including the repair patch. Alternatively or additionally, the repair tool can further comprise a vacuum pump configured to be connected to the inner repair mould and/or the outer repair mould and to draw air from a space delimited by the inner and outer repair mould. Thus, a vacuum may be applied in the space including the repair patch.

In any case, the evacuation of the space including the repair patch allows reduction of any air entrapped in the repair patch and/or at an interface between repair patch and composite structure. This allows an increased quality of the resulting repair, since the repaired composite structure includes less or none voids or air bubbles.

According to a second aspect to better understand the present disclosure, a method for repairing a composite structure of an aircraft comprises positioning an inner repair mould to abut against a first surface of the composite structure around an opening in the composite structure, and placing a repair patch into the opening of the composite structure. The opening may be specifically provided in the composite structure, for example, to remove any damaged material or to cut away damaged material around an accidently made hole in the composite structure.

As an example only, the opening may have a tapered or stepped rim. This allows a predefined interface with the repair patch. Alternatively or additionally, the opening may have a circular form, an elliptical form, a rectangular form or a polygonal form. The repair patch has a corresponding circumference, i.e. can be tapered or stepped at its circumference, and/or can be of circular, elliptical, rectangular or polygonal form.

The method can further comprise positioning an outer repair mould to abut against a second surface of the composite structure around the opening in the composite structure, wherein the second surface is opposite to the first surface. Thus, the outer repair mould provides the fixation for the repair patch, so that the repair patch can be positioned in the opening for integration into the composite structure. The fixation may include positioning the repair patch in an overlapping manner at an interface region between repair patch and composite structure, particularly the rim of the opening of the composite structure.

The method can further comprise connecting the inner repair mould with the outer repair mould with at least one bolt, wherein the at least one bolt is mounted to the inner and outer repair moulds at a respective region corresponding to the opening in the composite structure or corresponding to an edge region of the composite structure at the rim of the opening. Thus, the at least one bolt can connect the inner and outer repair moulds in a manner providing the shortest distance between inner and outer repair mould for maximum pressure between inner and outer repair moulds.

Furthermore, the method can comprise applying a force on the at least one bolt to move the inner and outer repair mould towards one another, and joining the repair patch with the composite structure. Joining the repair patch with the composite structure means an integration of the repair patch into the material of the composite structure, to form an integral composite structure and repair the composite structure at the opening.

In an implementation variant, the method can further comprise aligning the inner repair mould and the outer repair mould with the repair patch and the opening. In case the composite structure at the opening has a non-plane shape (cross-section), the inner and outer repair moulds and the repair patch require a corresponding non-plane shape. In order to provide a high-quality repair, at least the inner and outer repair moulds should be aligned to one another to provide a space therebetween that corresponds to the curvature of the composite structure at the opening.

In another implementation variant, the method can further comprise providing at least one through-hole in the composite structure. Alternatively or additionally, the method can further comprise providing at least one through-hole in the repair patch. The method step of connecting the inner and outer repair moulds can then comprise passing one of the at least one bolt through one of the at least one through-hole. The at least one bolt running through a through hole in the composite structure and/or repair patch provides for optimal positioning of the at least one bolt between the inner and outer repair moulds. Specifically, such through holes allow arranging the at least one bolt along the shortest path between inner and outer repair moulds, so that the force induced by the at least one bolt on the inner and outer repair moulds is substantially perpendicular to the inner and outer repair mould and, hence, substantially perpendicular to the composite structure and/or repair patch. This facilitates an optimal pressure distribution from the inner and/or outer repair moulds onto the composite structure and repair patch, so that high-quality repairs can be achieved.

In a further implementation variant, the method can further comprise positioning a sheath into the at least one through-hole, wherein the sheath is made from a flexible material. In other words, the at least one through hole may be made with a larger diameter (opening area) than a diameter (cross-sectional area) of the bolt. The sheath positioned in the through hole allows movement of the bolt when aligning the inner and outer repair moulds with respect to the composite structure and repair patch and further protects the side face of the through hole.

In yet a further implementation variant, the method can further comprise removing at least the outer repair mould and closing the at least one through-hole with a plug. Such plug may be standardized as is the at least one through hole. Moreover, the plug may be adhered to the side face of the through hole. Alternatively or additionally, the through hole may be closed in a secondary heating process, which may be achieved at the second surface of the composite structure (or outer surface of the repair patch) without application of inner and/or outer repair moulds due to the small size of the hole.

In another implementation variant, the joining of the repair patch with the composite structure can comprise heating the repair patch and the edge region of the composite structure, and/or curing a resin matrix of the repair patch and/or at the rim of the composite structure, and/or welding the repair patch to the composite structure.

The heating and curing may include heating the repair patch and the edge region of the composite structure. Such heating may be achieved by heating the inner and/or outer repair mould or a portion thereof, and/or by heating a caul element. The heat source can be implemented as a heat blower, infrared heater, direct heat application via electrical or inductive heating, integrated heaters and/or heating layers in the repair tool. Welding may be achieved by resistance welding using a dedicated material positioned in the interface between repair patch and rim of the composite structure.

In yet another implementation variant, the method may further comprise cooling a portion of the repair tool and/or cooling the composite structure in or adjacent to the edge region. This allows achieving a desired temperature distribution and protects the composite structure further away from the repair site from being melted.

In a further implementation variant, a larger repair site, i.e. a larger opening and the composite structure may be closed in a multi-stage repair process according to the method of the second aspect. In this case, each repair patch is sized to cover only a portion of the opening, so that in each stage of the repair process a portion of the opening is closed and repaired. This allows use of a simpler and smaller repair tool, which further facilitate repairing of the composite structure having a complex curvature, since the individual repair patches are of simpler form, i.e. are closer to a flat shaped patch.

In another implementation variant, the composite structure of the aircraft can form part of a fuselage, wing, vertical stabiliser or tailplane of the aircraft.

The present disclosure is not restricted to the aspects and variants in the described form and order. Specifically, the description of aspects and variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof.

Preferred embodiments of the invention are now explained in greater detail with reference to the enclosed schematic drawings, in which
- Figure 1: schematically illustrates a cross section of an exemplary repair tool;
- Figure 2: schematically illustrates a cross section of an exemplary repair site;
- Figure 3: schematically illustrates a cross section of another exemplary repair tool;
- Figure 4: schematically illustrates a cross section of yet another exemplary repair tool;
- Figure 5: illustrates an exemplary flow diagram of a method of repairing a composite structure; and
- Figure 6: schematically illustrates a vehicle having a repair site.

It is noted that the schematic drawings illustrate some of the elements and components at a distance from one another. This, however, can be for increased visibility of the individual elements and components and, hence, clarity of the drawing. Some of these elements and components may contact one another or are integrated into one another, although drawn separated from one another.

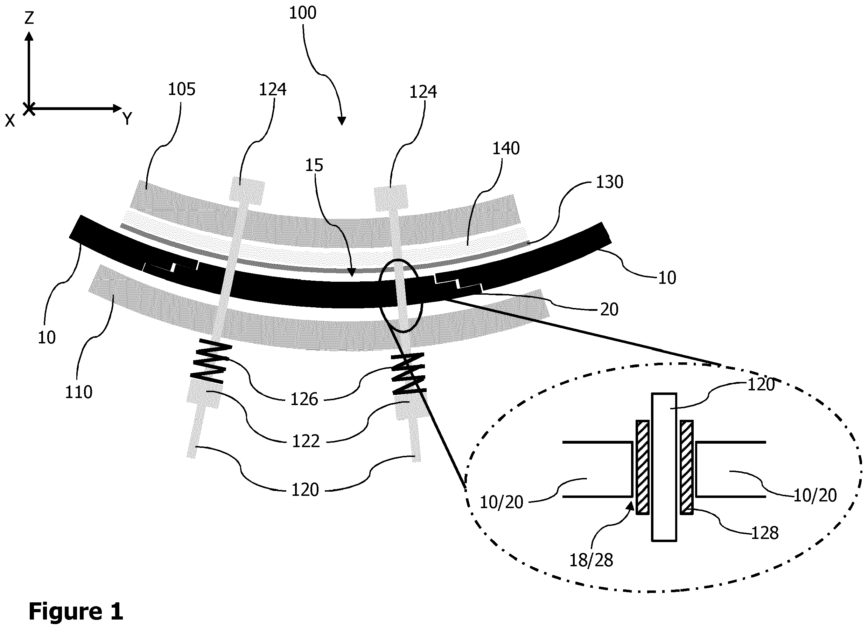

Figure 1 schematically illustrates a cross section of an exemplary repair tool 100 capable of repairing a composite structure 10. Specifically, the composite structure 10 is provided with an opening 15, which may be made when removing a damaged portion of the composite structure 10. The repair tool 100 includes an inner repair mould 105 and an outer repair mould 110. Both moulds 105, 110 are shaped to abut against a respective first and second surface of the composite structure 10 around the opening 15. Particularly, the moulds 105, 110 can be shaped (curved) to correspond to the first (inner) surface and second (outer) surface of the composite structure 10 around the opening 15. Once placed at the opening 15, the inner and outer repair moulds 105, 110 cover the opening 15 at least partially on opposite surfaces of the composite structure 10.

At least one bolt 120 is used to connect the inner repair mould 105 with the outer repair mould 110. Each bolt 120 can comprise a head or nut 124 or other means to provide a rigid coupling between bolt 120 and inner repair mould 105. On the other hand, each bolt 120 can further comprise a nut 122 providing a coupling between bolt 120 and outer repair mould 110. One of the nuts 122, 124, for example outer nut 122, may be turned, for example along a thread on bolt 120, in order to move the inner repair mould 105 and the outer repair mould 110 towards one another and to clamp the composite structure 10 therebetween.

This clamping may be facilitated by application of the pressurizing device 126. As an exemplary pressurizing device 126, the exemplary repair tool 100 of Figure 1 includes a spring, that applies a force on the outer repair mould 110 and the nut 122. Thus, the inner and outer repair moulds 105, 110 are moved and/or pressed towards one another by the pressurizing device 126. Instead of or additionally to the illustrated spring, a motor and/or a hydraulic or pneumatic piston/cylinder may also be employed as a pressurizing device 126.

Furthermore, the at least one bolt 120 of the exemplary repair tool 100 of Figure 1 is illustrated as being arranged in a region corresponding to the opening 15. Alternatively, at least one bolt 120 may be arranged in a region corresponding to an edge region of the composite structure 10 at a rim of the opening 15, such as the portions of the composite structure 10 visible in Figure 1 and close to the opening 15. Both allows a substantially perpendicular arrangement of bolt 120 with respect to inner repair mould 105, composite structure 10 as well as outer repair mould 110, so that the force applied by the bolt 120 acts substantially perpendicular on and between inner and outer repair moulds 105, 110.

The repair tool 100 may further comprise a pressure distribution means arranged on a side of the inner repair mould 105 abutting against the first surface of the composite structure 10. For instance, a caul sheet 130 may be arranged on an outer surface of the inner repair mould 105. Such caul sheet 130 facilitates forming of the inner surface of the repair site.

The pressure distribution means may further comprise a flexible layer 140 improving pressure distribution from bolts 120, particularly nuts 124, towards the first (inner) surface of the composite structure 10.

While outer repair mould 110 is simply drawn as a single piece, it may also comprise a pressure distribution means, such as a caul sheet 130 and/or a flexible layer 140.

The repair site may include a repair patch 20 that is placed into the opening 15 of the composite structure 10. The repair patch 20 may be made of or include a similar or same material as the composite structure 10. For instance, repair patch 20 can be a fibre reinforced thermoplastic component. Preferably, the melting temperature of the repair patch 20 is similar or identical to that of the composite structure 10.

In Figure 1 the end of the repair patch 20 and the rim of the opening 15 of the composite structure 10 are stepped. This provides a region of overlap and further an interface between repair patch 20 and composite structure 10 with a large surface in at least two directions (in a longitudinal direction of the composite structure 10 as well as thickness direction thereof).

Figure 1 further illustrates an exemplary detail of a manner how bolt 120 can be arranged. Specifically, the composite structure 10 can be provided with at least one through hole 18 and/or the repair patch 20 can be provided with at least one through hole 18, 28. One bolt 120 can be arranged to run through one of the through holes 18, 28. In order to protect the side face of the through hole 18, 28 and to further allow a movement of the bolt 120 to a certain degree, a flexible sheath 128 is positioned in the at least one through hole 18, 28. Such sheath 128 further facilitates removing the bolt 120 from the composite structure 10 or repair patch 20 after repairing the composite structure 10. The sheath 128 may later be removed or used to close the through hole 18, 28 after repair of the composite structure 10.

The actual repairing of the composite structure 10 is achieved by joining the repair patch 20 with the composite structure 10. For instance, the repair patch 20 and at least the edge region of the composite structure 10 at the opening 15 are heated at least up to a melting temperature of the repair patch 20 and the composite structure 10. This allows joining of thermoplastic material of the repair patch 20 and of the composite structure 10 via merging of the thermoplastic material (e.g., interlinking of the thermoplastic polymer molecules).

Alternatively or additionally, the repair patch 20 may be welded to the composite structure 10. As an example only, the repair patch 20 may be spot welded to the composite structure 10 before the outer repair mould 110 is positioned and/or is moved towards the inner repair mould 105 and clamp the repair patch 20 in the opening 15 and the composite structure 10. After spot welding, the remainder of the interface between repair patch 20 and composite structure 10 may be welded or joined by heating/melting of the respective materials.

Also alternatively or additionally, a resin matrix of the repair patch 20 may be cured and interlinked with the edge region of the composite structure 10. The edge region of the composite structure 10 may be provided with uncured resin and/or may be activated, so that the material of the composite structure 10 interlinks with the material of the repair patch 20 during curing.

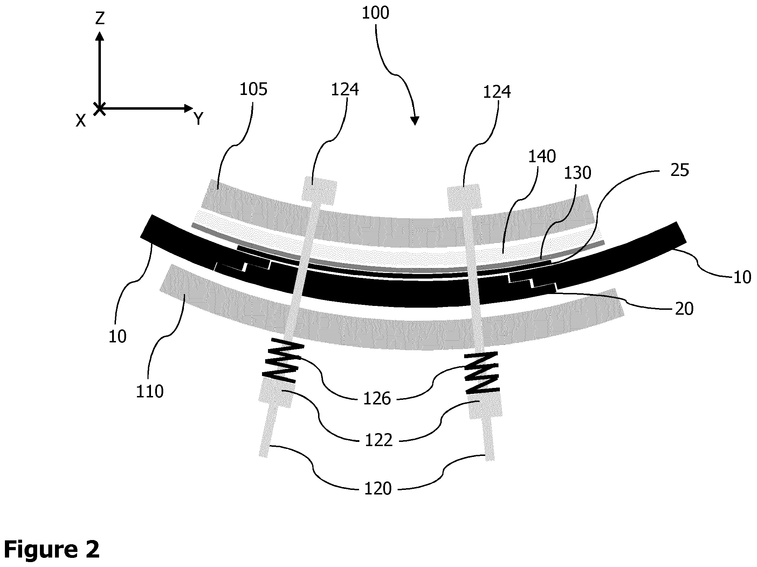

Figure 2 schematically illustrates a cross section of an exemplary repair site in a composite structure 10. The repair tool 100 is the same as the one illustrated in Figure 1, so that its description is omitted here to avoid repetitions. The repair side of Figure 2 is additionally provided with an inner patch 25. Such inner patch 25 may be coupled with the inner mould 105 when placed at the first surface of the composite structure 10. The inner patch 25 can be sized to cover one or more interface regions of the repair patch 20 and the rim of the opening 15 of the composite structure 10 or can cover the entire opening 15 and overlap with the complete rim of the opening 15.

This inner patch 25 allows the provision of an increased local thickness, in order to account for any expected weakening along the interface. Thus, an increased quality repair of the composite structure can be achieved. Moreover, inner patch 25 covers any gap between the opening 15 and repair patch 20 at the interface thereof. It is to be understood that an outer patch (not illustrated) could likewise be provided at the outer repair mould 110. In case the second surface of the composite structure 10 forms an exterior side of the vehicle, such outer patch may be omitted due to aerodynamic reasons.

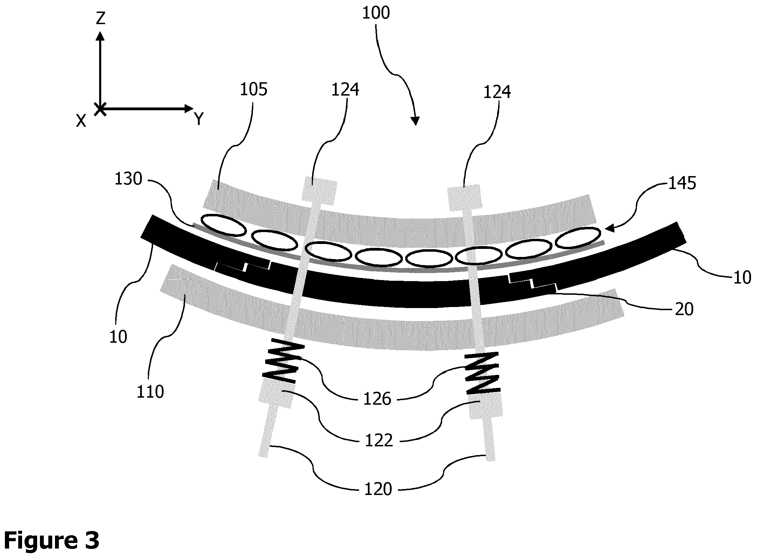

Figure 3 schematically illustrates a cross section of another exemplary repair tool 100. The elements and components of the repair tool 100 that are identical or have at least the same functionality as those of repair tool 100 illustrated in Figure 1 have been provided with the same reference signs. Since their function is the same, a repetition of their description is omitted.

The repair tool 100 of Figure 3 shows a pressure distribution means, particularly a flexible layer, in form of one or more cushions 145. Such cushions 145 can be flexible and/or inflatable. Such cushions 145 facilitate pressure distribution from nuts 124 of bolts 120 over the entire outer surface of the inner repair mould 105. In case of a plurality of cushions 145 as illustrated, any pressure applied onto the first surface of the composite structure 10 as well as the inner surface of the repair patch 20 may be adapted. Such adaptation of pressure may be applied by a particular thermal expansion of such cushion 145 during heating of the repair site and/or by inflating or deflating the cushion 145.

Each of the cushions 145 may extend in a direction perpendicular to the drawing plane of Figure 3, so that each cushion 145 forms a tubular device. Alternatively and/or additionally, a plurality of cushions 145 may be provided in the direction perpendicular to the drawing plane of Figure 3. Such plurality of cushions may have the same size or may have varying sizes.

It is to be understood that one or more cushions 145 may also be employed with the outer repair mould 110.

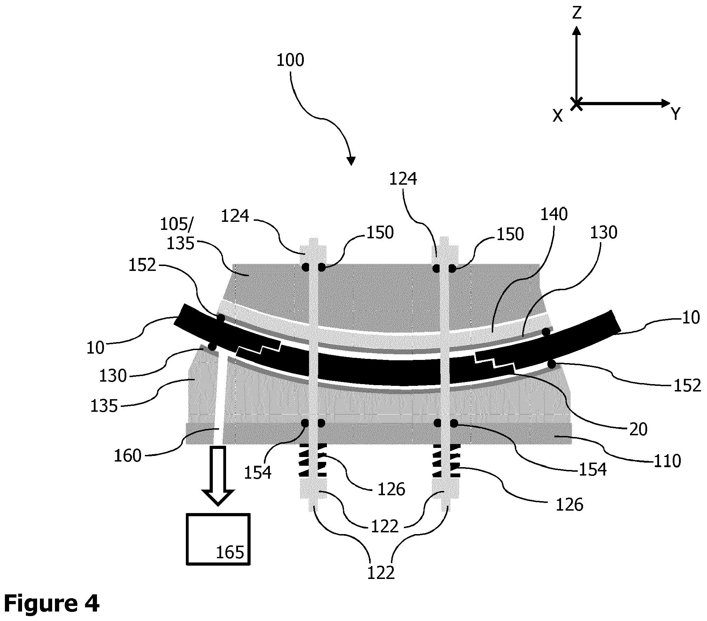

Figure 4 schematically illustrates a cross section of yet another exemplary repair tool 100. The elements and components of the repair tool 100 that are identical or have at least the same functionality as those of repair tool 100 illustrated in Figure 1 have been provided with the same reference signs. Since their function is the same, a repetition of their description is omitted.

The first difference to the repair tool 100 of Figures 1 to 3 is the arrangement of bolts 120, which are arranged parallel to one another and are not perpendicular to the repair patch 20 and/or composite structure 10. The inner and outer repair moulds 105, 110 are further provided with a respective caul form 135. This caul form 135 is a further example for a pressure distribution means. The caul form 135 has a plane end, so that inner and outer repair mould 105, 110 can also be arranged in a plane, i.e. have a bar form. This facilitates attachment of nuts 122, 124 and/or pressurizing device 126 to the inner and/or outer repair mould 105, 110. The opposite end of the caul form 135, here the respective end facing the composite structure 10 and repair patch 20, is provided with a curvature corresponding to the composite structure 10. Optionally, a caul sheet 130 may be provided at the first and second surface of the composite structure 10 and/or the inner and outer surface of the repair patch 20.

The second difference of the repair tool 100 of Figure 4 over the repair tool 100 of Figures 1 to 3 is the provision of seals 150 to 154, and an evacuation port 160. The at least one seal 150, 152, 154 seals a space delimited by the inner and outer repair moulds 105, 110. The first seal 150, such as a O-ring, can be arranged at the bolt 120 with respect to the inner repair mould 105. A second seal 152, such as a sealing cord, can be arranged between inner repair mould 105 and composite structure 10 as well as outer repair mould 110 and composite structure 10. For instance, the second seal 152 may form a loop and surrounds the entire opening 15 in the composite structure 10. A third seal 154, such as another O-ring, can be arranged at the bolt 120 with respect to the outer repair mould 110. Thus, a space delimited by the inner and outer repair moulds 105, 110 and including the opening 15 in the composite structure 10 is sealed in an airtight manner.

The evacuation port 160 can be in fluid communication with this space delimited by the inner and outer repair moulds 105, 110 and sealed by the at least one seal 150 to 154. The evacuation port 160 can be used to draw air from this space, in order to improve quality of the repair by avoiding any voids or air entrapments in the repair patch 20 or at an interface between repair patch 20 and composite structure 10.

In addition, an exemplary vacuum pump 165 may be provided that can be connected to the inner repair mould 105 and/or to the outer repair mould 110 (only the vacuum pump 165 connected to the outer repair mould 110 is illustrated in Figure 4). The vacuum pump can draw air from the space delimited by the inner and outer repair mould 105, 110.

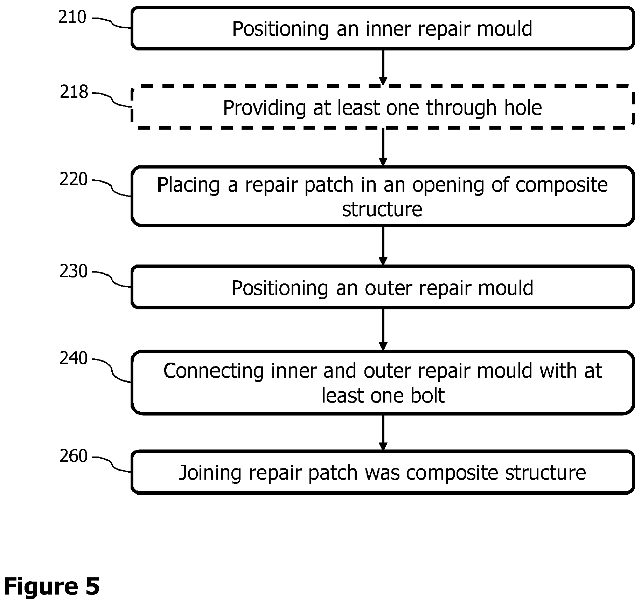

Figure 5 illustrates an exemplary flow diagram of a method of repairing a composite structure 10. As indicated above, a composite structure 10 may require repairing, due to a damage or a hole in the composite structure 10. Thus, an opening 15 is formed in the composite structure 10, the opening 15 having, for example, a predefined size.

In method step 210, an inner repair mould 105 is positioned to abut against a first (inner) surface of the composite structure 10 around the opening 15. Thereafter, in step 220, a repair patch 20 is placed into the opening 15 of the composite structure 10. The repair patch 20 may be of the same or quite similar material as the composite structure 10. In a further step 230, an outer repair mould 110 is positioned to abut against the second (outer) surface of the composite structure 10 around the opening 15.

The method continues with step 240: connecting the inner repair mould 105 with the outer repair mould 110 with at least one bolt 120, the bolt 120 is mounted to the inner/outer repair moulds 105, 110 at a respective region corresponding to the opening 15 in the composite structure 10 or corresponding to an edge region of the composite structure 10 at a rim of the opening 15. This requires at least one through hole 18, 28 in the composite structure and/or in the repair patch 20, respectively. Such through holes 18, 28 may be provided in an optional method steps 218. Step 218 may be performed before placing the repair patch 20 in the opening 15 in step 220. The connecting of the inner and outer repair moulds 105, 110 then comprises passing one of the at least one bolt 120 through one of the at least one through holes 18, 28.

Thereafter, in step 260, the repair patch 20 is joined with the composite structure 10. This may be achieved by optionally applying, in step 250, a force on the at least one bolt 120 to move the inner and outer repair moulds 105, 110 towards one another. Thus, the inner and outer repair moulds 105, 110 press the repair patch 20 and the edge region of the composite structure 10, so that the repair patch 20 is fixed in the opening 15. The joining may then be performed by heating the repair patch 20 and the edge region of the composite structure 10 until they melt. Alternatively or additionally, a resin matrix of the repair patch 20 or the composite structure 10 may be cured and/or the repair patch 20 is welded to the composite structure 10.

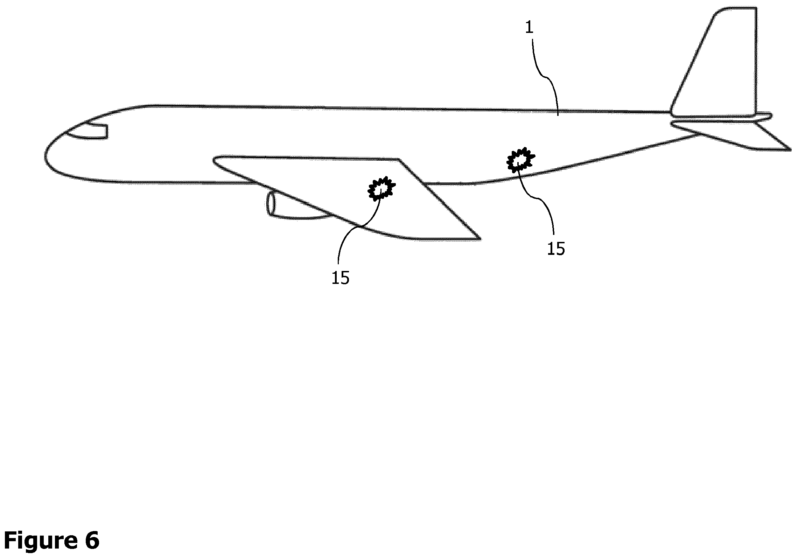

Figure 6 schematically illustrates a vehicle 1 having at least one repair site. Specifically, the vehicle 1 may comprise at least one portion made out of a composite structure 10, such as a portion of the wing or the fuselage. In case of a damage of such composite structure 10, an opening 15 can be formed in the wing or fuselage. This opening 15 is then repaired by being closed with a repair patch 20 positioned and joined to the composite structure 10 using the repair tool 100 according to any of Figures 1 to 4 as well as the method according to Figure 5.

The above description of the drawings is to be understood as providing only an exemplary embodiment of the present invention and shall not limit the invention to this particular embodiment.

## Claims

1. A repair tool (100) for repairing a composite structure (10), the tool (100) comprising:
an inner repair mould (105) shaped to abut against a first surface of the composite structure (10) around an opening (15) in the composite structure (10) and configured to at least partially cover the opening (15);
an outer repair mould (110) shaped to abut against a second surface of the composite structure (10) around the opening (15) in the composite structure (10) and configured to at least partially cover the opening (15), wherein the second surface is opposite to the first surface;
at least one bolt (120) connecting the inner repair mould (105) with the outer repair mould (110) and configured to move the inner repair mould (105) and the outer repair mould (110) towards one another and to clamp the composite structure (10),
wherein the at least one bolt (120) is mounted to the inner and outer repair moulds (105, 110) at a respective region corresponding to the opening (15) in the composite structure (10) or corresponding to an edge region of the composite structure (10) at a rim of the opening (15).

2. The repair tool (100) according to claim 1, further comprising:
a pressure distribution means (130, 135, 140) configured to be arranged on a side of the inner repair mould (105) abutting against the first surface of the composite structure (10) and/or on a side of the outer repair mould (110) abutting against the second surface of the composite structure (10).

3. The repair tool (100) according to claim 2, wherein the pressure distribution means comprises a caul sheet (130), a caul form (135), and/or a flexible layer (140).

4. The repair tool (100) according to claim 3, wherein the flexible layer (140) comprises heat resistant silicone, one or more flexible cushions (145), and/or one or more inflatable cushions (145).

5. The repair tool (100) according to one of claims 1 to 4, further comprising:
a pressurising device (126) configured to apply a force on the at least one bolt (120) moving the inner and outer repair mould (105, 110) towards one another.

6. The repair tool (100) according to claim 5, wherein the pressurising device (126) comprises a spring, a hydraulic or pneumatic cylinder, and/or a motor.

7. The repair tool (100) according to one of claims 1 to 6, further comprising:
at least one seal (150, 152, 154) configured to seal a space delimited by the inner or outer repair mould (105, 110) and including the opening (15) in the composite structure (10) in an airtight manner.

8. The repair tool (100) according to one of claims 1 to 7, further comprising:
an evacuation port (160) in the inner repair mould (105) and/or in the outer repair mould (110), the evacuation port (160) being in fluid communication with a space delimited by the inner and outer repair mould (105, 110); and/or
a vacuum pump (165) configured to be connected to the inner repair mould (105) and/or the outer repair mould (110) and to draw air from a space delimited by the inner and outer repair mould (105, 110).

9. A method for repairing a composite structure (10) of an aircraft (1), the method comprising:
positioning (210) an inner repair mould (105) to abut against a first surface of the composite structure (10) around an opening (15) in the composite structure (10);
placing (220) a repair patch (20) into the opening (15) of the composite structure (10);
positioning (230) an outer repair mould (110) to abut against a second surface of the composite structure (10) around the opening (15) in the composite structure (10), wherein the second surface is opposite to the first surface;
connecting (240) the inner repair mould (105) with the outer repair mould (110) with at least one bolt (120), wherein the at least one bolt (120) is mounted to the inner and outer repair moulds (105, 110) at a respective region corresponding to the opening (15) in the composite structure (10) or corresponding to an edge region of the composite structure (10) at a rim of the opening (15);
applying (250) a force on the at least one bolt (120) to move the inner and outer repair mould (105, 110) towards one another; and
joining (260) the repair patch (20) with the composite structure (10).

10. The method according to claim 9, further comprising:
aligning (245) the inner repair mould (105) and the outer repair mould (110) with the repair patch (20) and the opening (15).

11. The method according to claim 9 or 10, comprising:
providing (218) at least one through-hole (18) in the composite structure (10); and/or
providing (218) at least one through-hole (28) in the repair patch (20),
wherein connecting (240) the inner and outer repair moulds (105, 110) comprises passing one of the at least one bolt (120) through one of the at least one through-hole (18, 28).

12. The method according to claim 11, further comprising:
positioning (219) a sheath (128) into the at least one through-hole (18, 28), wherein the sheath (128) is made from a flexible material.

13. The method according to claim 11 or 12, further comprising:
removing (270) at least the outer repair mould (110); and
closing (280) the at least one through-hole (18, 28) with a plug.

14. The method according to one of claims 9 to 13, wherein joining the repair patch (20) with the composite structure (10) comprises heating the repair patch (20) and the edge region of the composite structure (10), and/or curing a resin matrix of the repair patch (20) and/or at the rim of the composite structure (10), and/or welding the repair patch (20) to the composite structure (10).

15. The method according to one of claims 9 to 14, wherein the composite structure (10) of the aircraft (1) forms part of a fuselage, wing, vertical stabiliser or tailplane of the aircraft (1).
